# EUROPÄISCHE PATENTSCHRIFT

(11) **EP 1 216 213 B1**
(45) Veröffentlichungstag und Bekanntmachung des Hinweises auf die Patenterteilung: **10.01.2007**
(21) Anmeldenummer: 01984579.1
(22) Anmeldetag: 24.09.2001
(51) Int. Cl.: C04B 37/00, F16D 69/02, F16C 33/04, C04B 35/80, C04B 35/573

(54) **REIB- ODER GLEITKÖRPER AUS MIT FASERBÜNDELN VERSTÄRKTEN VERBUNDWERKSTOFFEN MIT KERAMISCHER MATRIX**
FRICTION OR SLIP BODY COMPRISING COMPOSITE MATERIALS, REINFORCED WITH FIBRE BUNDLES AND CONTAINING A CERAMIC MATRIX
CORPS DE FROTTEMENT OU DE GLISSEMENT CONSTITUE DE MATERIAUX COMPOSITES A MATRICE CERAMIQUE RENFORCES PAR DES FAISCEAUX DE FIBRES

(30) Priorität: 26.09.2000 DE 10048012
(43) Veröffentlichungstag der Anmeldung: 26.06.2002
(73) Patentinhaber: AUDI AG, 85045 Ingolstadt (DE)
(72) Erfinder: GRUBER, Udo, 86356 Neusäss (DE); HEINE, Michael, 86695 Allmannshofen (DE); KIENZLE, Andreas, 86672 Thierhaupten (DE)
(74) Vertreter: Deckers, Hellmuth Alexander
(86) Internationale Anmeldenummer: PCT/DE2001/003669
(87) Internationale Veröffentlichungsnummer: WO 2002/026659

(56) Entgegenhaltungen:
- WO-A-99/41069
- DE-A- 19 834 704
- DE-A- 19 901 215
- US-A- 5 242 746

## Beschreibung

Die vorliegende Erfindung betrifft Reib-oder Gleitkörper aus mindestens zwei mit Faserbündeln verstärkten Verbundwerkstoffen mit keramischer Matrix, wobei ein erster Verbundwerkstoff die Außenseite des Gleitkörpers bildet und ein zweiter Verbundwerkstoff mit dem ersten flächig verbunden ist sowie ein Verfahren zur Herstellung von Reib-oder Gleitkörpern aus mindestens zwei mit Faserbündeln verstärkten Verbundwerkstoffen mit keramischer Matrix, wobei ein erster Verbundwerkstoff die Außenseite des Reib-oder Gleitkörpers bildet und ein zweiter Verbundwerkstoff mit dem ersten flächig verbunden wird.

Mit hochtemperaturbeständigen Fasern und/oder Faserbündeln verstärkte Verbundwerkstoffe mit keramischer Matrix sind seit etwa 10 Jahren bekannt und werden in vielen Anwendungsfällen eingesetzt, wo extrem hohe Anforderungen an einen Werkstoff gestellt werden, wie hohe Temperaturbeständigkeit und gleichzeitige Festigkeit und Duktilität. Diese Anforderungen werden insbesondere an Reib- oder Gleitpartner gestellt.

Das Maß, in dem die mit Fasern und/oder Faserbündeln verstärkten Verbundwerkstoffe mit keramischer Matrix, im folgenden kurz CMC-Verbundwerkstoffe genannt, im Bereich der Anwendungen mit hohen Temperaturanforderungen eingesetzt werden können, hängt nicht zuletzt von der Struktur der Matrix der Verbundwerkstoffe und insbesondere der Struktur ihrer Oberfläche ab. Solange die Matrix der Verbundwerkstoffe aus verschiedenen Phasen zusammengesetzt ist, kann die Matrixstruktur an der Oberfläche der CMC-Verbundwerkstoffe durch ein Herauslösen einer Matrixphase, die bei niedrigeren Temperaturen schmilzt und durch chemische Prozesse wie Oxidation angegriffen werden kann, geschädigt werden, wodurch die Einsatzzeit der CMC-Verbundwerkstoffe heutzutage begrenzt ist. Diese Probleme werden umso größer, wenn ein CMC-Werkstoff zusätzlich einem mechanischen Verschleiß ausgesetzt ist. Hierbei werden immer neue schon bei niedrigeren Temperaturen angreifbare Kristallite der Matrix freigesetzt, die sehr schnell abgebaut werden. Außerdem bieten die durch die herausgelösten Kristallite entstandenen Lücken im Matrixverbund eine Möglichkeit zu einem erhöhten mechanischen Angriff.

Anwendungsgebiete von CMC-Verbundwerkstoffen, bei denen die mechanische Beanspruchung eine wesentliche Rolle spielt, sind zum Beispiel die Anwendung von CMC-Elementen als Gleitlagerkomponenten und Reibbeläge, wie Bremsscheiben und Bremsbeläge. Zunächst wurden im Bereich der Reibbeläge vor allem mit Kohlenstoffasern verstärkte Verbundwerkstoffe mit Kohlenstoffmatrix, sogenannte CFC-Verbundwerkstoffe, eingesetzt. Diese wiesen jedoch den Nachteil einer nur unzureichenden Temperaturbeständigkeit des Werkstoffs gegen einen Oxidationsangriff auf. Daher ist man inzwischen bemüht, die Kohlenstoffmatrix des Verbundwerkstoffs durch eine oxidationsbeständigere Matrix zu ersetzen. Hierbei wird vor allem mit der gegen Oxidation bei wesentlich höheren Temperaturen (1500 °C) beständigen SiC-Matrix mit und ohne zusätzlicher Oberflächenschutzschicht gearbeitet, so daß heute vor allem der Einsatz von mit Kohlenstoffasern verstärkten Verbundwerkstoffen mit SiC-Matrix, im weiteren C/SiC-Verbundwerkstoffe genannt, für Reibbeläge wie Bremsscheiben und Bremsbeläge vorgesehen ist.

Es gibt inzwischen eine Reihe von Verfahren, C/SiC-Verbundwerkstoffe herzustellen, insbesondere auch mit der Absicht, sie als Komponenten von Bremssystemen einzusetzen. So werden in DE 197 10 105 und DE 197 11 829 Verfahren zur Herstellung von C/SiC-Verbundwerkstoffen beschrieben, bei denen mit mindestens einer Kohlenstoffschicht bzw. mit einer verfestigten Bindemittelschicht versehene Faserbündel mit kohlenstoffhaltigen Bindern mit oder ohne weitere Füllstoffe vermischt werden, danach die Mischungen verpreßt und ausgehärtet werden, bevor sie carbonisiert, evtl. graphitiert und abschließend mit flüssigem Silicium infiltriert werden. Aus diesen Werkstoffen werden bisher auch Gleit- und Reibkörper herstellt, die dann homogen aus einem Werkstoff bestehen.

Alle bisher nach den obigen Verfahren hergestellten Gleit-und Reibkörper aus C/SiC- Verbundwerkstoffen weisen eine inhomogene Struktur der Matrix auf, die im Falle der Verfahren nach DE 197 10 105 und DE 197 11 829 sich dahingehend äußert, daß die Matrix auch Phasen von reinem Kohlenstoff und/oder Silicium aufweist und damit keine homogene Zusammensetzung der Matrix. Die Kohlenstoffbereiche oxidieren bei höherer Temperaturbeanspruchung, d.h. brennen aus dem Verbundwerkstoff aus, und die Siliciumbereiche schmelzen bereits bei einer Temperatur von ca. 1400 °C. Damit ist es mit diesen Verfahren bisher nicht gelungen, eine Matrixstruktur der C/SiC-Verbundwerkstoffe zu erreichen, die geeignet ist, dauerhaften Temperaturbelastungen bei hohen Temperaturen standzuhalten, insbesondere nicht bei zusätzlicher mechanischer Belastung. Diese Belastungen treten insbesondere an der Oberfläche der Reib- oder Gleitkörper zusätzlich zu den Ausbrennungen auf, so daß die Oberfläche mit der Zeit ein rauhes Erscheinungsbild aufweist, wodurch die für den Gleit- oder Reibprozeß zur Verfügung stehende Fläche reduziert wird.

Mit dem in der deutschen Patentanmeldung DE 199 44 345 A1 beschriebenen Verfahren zur Herstellung von C/SiC-Verbundwerkstoffen ist es erstmals möglich einen C/SiC-Verbundwerkstoff herzustellen, der einen möglichst geringen Anteil der Silicium- und Kohlenstoffphase aufweist und eine Gefügestruktur mit Rissen, die sich bei mechanischer Beanspruchung nicht negativ auswirken. Der hierbei hergestellte faserbündelverstärkte Verbundwerkstoff mit keramischer Matrix beinhaltet Faserbündel, die aus zwei verschiedenen Anteilen bestehen, die eine unterschiedliche mittlere Faserbündellänge aufweisen, wobei diese beiden Faserbündelanteile in der Gesamtfaserbündelverteilung der Masse der Faserbündel des Verbundwerkstoffs bezüglich der Faserbündellänge durch ein Minimum der Faserbündelverteilung getrennt werden. Auch wenn bei diesen Verbundwerkstoffen der Kohlenstoffanteil in der Matrix deutlich reduziert wurde, besteht immer noch das Problem, daß, insbesondere infolge der mechanischen Bearbeitung der Verbundwerkstoffe, immer noch an der Oberfläche des Verbundwerkstoffs freie Kohlenstoffbereiche existieren aufgrund der Kohlenstoffaserbündel, so daß bei hohen Temperaturbeanspruchungen in oxidativer Atmosphäre die Faserbündel an der Oberfläche herausgebrannt werden, was insbesondere nach intensiver Beanspruchung z.B. von Bremsscheiben zu beobachten ist.

Ein Konzept, diesem Problem abzuhelfen, besteht darin, daß der tragende Kern von Reib- und Gleitkörpern aus einem anderen Werkstoff besteht als die äußere Reibschicht, was z.B. in DE 44 38 456 beschrieben wird. Für den tragenden Kern können hierbei die herkömmlich genutzten CMC-Verbundwerkstoffe, z.B. auch CFC- Verbundwerkstoffe, genutzt werden. Der Werkstoff der äußeren Reibschicht ist jedoch so zu modifizieren, daß ein Herausbrennen der oberflächennahen Faserbündel vermieden wird. Ein erster Ansatz hierzu wird in der Patentanmeldung DE 198 05 868 beschrieben, in dem verschiedene Preßmassen in einem einzigen Preßvorgang zu einem Formkörper verpreßt werden, der abschließend mindestens zwei ineinander übergehende Schichten eines CMC- Verbundwerkstoffs aufweist, wobei die Fasern in den beiden Schichten verschiedene Schutzbeschichtungen oder Mengenanteile aufweisen. Insbesondere besteht die Technologie der beschriebenen Formkörper darin, daß die äußere Schicht, die Reibschicht, überwiegend oder vollständig aus Siliziumcarbid besteht, da die Fasern der Reibschicht beim Silizierungsprozeß überwiegend oder sogar vollständig aufgezehrt werden. Im praktischen Einsatz derartiger Reib- oder Gleitkörper hat sich jedoch gezeigt, daß es bei den hohen auftretenden Temperaturbeanspruchungen zu Abplatzungen von Teilen der Reibschicht kommen kann, die durch die unterschiedlichen thermischen Ausdehnungskoeffizienten von Trägerschicht und Reibschicht hervorgerufen werden. Daher wird mit der Zeit die tragende Reibschicht zerstört, so daß ihre beabsichtigte positive Wirkung sich bei diesen Reib- und Gleitkörpern mit der Zeit als Nachteil erweist.

Eine weitere Variante, einen Reibring aus einem Tragkörper und einer äußeren Reibschicht herzustellen, ist in der Patentanmeldung DE 198 34 704 A1 beschrieben. Hierbei weist der Tragkörper als Verstärkung Gewebelagen aus Kohlenstofffasern auf, während die Reibschicht durch Kurzfasern verstärkt ist. Bei den mit Kurzfasern verstärkten Reibschichten treten aber die Probleme des Ausbrennens von Fasern im Bereich der Oberfläche genauso auf wie bereits oben beschrieben für Gleit-und Reibkörper, die nur aus einem Verbundwerkstoff bestehen.

Bisher ist es noch nicht gelungen einen CMC- Gleit- oder Reibkörper zu finden, der insbesondere womöglich aus einem homogenen Werkstoff oder auch aus mindestens einem Trägerkörper und mindestens einer Reibschicht besteht und nach hoher thermischer und oxidativer Beanspruchung noch eine nahezu intakte Oberfläche aufweist.

Der Erfindung liegt daher die Aufgabe zugrunde, Reib- und Gleitkörper auf der Basis faserbündelverstärkter Verbundwerkstoffe mit keramischer Matrix zur Verfügung zu stellen, deren Oberfläche durch eine äußere Reibschicht gegegenüber den aus dem Stand der Technik bekannten Gleit-und Reibkörpern auf der Basis faserbündelverstärkter Verbundwerkstoffe mit keramischer Matrix so modifiziert wurde, daß sie auch nach hohen Temperaturbeanspruchungen in oxidativer Atmosphäre weder Abplatzungen noch große Bereiche mit Ausbrennungen aufweist. Außerdem ist ein Verfahren zu finden, derartige Verbundwerkstoffe herzustellen.

Die Erfindung betrifft daher Reib- oder Gleitkörper aus mindestens zwei mit Faserbündeln verstärkten Verbundwerkstoffen mit keramischer Matrix, wobei ein erster Verbundwerkstoff als Reibschicht die Außenseite des Reib- oder Gleitkörpers bildet und ein zweiter Verbundwerkstoff als Tragkörper mit der Reibschicht flächig verbunden ist, dadurch gekennzeichnet, daß die mindestens zwei Verbundwerkstoffe verschiedene Anteile an Faserbündeln, einen Verstärkungsfaserbündelanteil und einen Matrixfaserbündelanteil, mit unterschiedlicher mittlerer Faserbündellänge aufweisen, wobei die mittlere Faserbündellänge des Verstärkungsfaserbündelanteils des Tragkörpers zwischen 4 mm und 20 mm liegt, die' mittlere Faserbündellänge des Matrixfaserbündelanteils des Tragkörpers zwischen 0,2 mm und 5 mm liegt, die mittlere Faserbündellänge des Verstärkungsfaserbündelanteils der Reibschicht zwischen 0,5 mm und 8 mm liegt, und die mittlere Faserbündellänge des Matrixfaserbündelanteils der Reibschicht zwischen 0,25 mm und 4 mm liegt.

Die erfindungsgemäßen Reib- oder Gleitkörper aus mindestens zwei mit Faserbündeln verstärkten Verbundwerkstoffen mit keramischer Matrix, wobei ein erster Verbundwerkstoff als Reibschicht die Außenseite des Gleitkörpers bildet und ein zweiter Verbundwerkstoff als Tragkörper mit der Reibschicht flächig verbunden ist, zeichnen sich dadurch aus, daß die mindestens zwei Verbundwerkstoffe verschiedene Anteile an Faserbündeln, ein Verstärkungsfaserbündelanteil und ein Matrixfaserbündelanteil, mit unterschiedlicher mittlerer Faserbündellänge aufweisen, so daß die Gesamtfaserbündelverteilung bezüglich der Faserbündellänge der in den Verbundwerkstoffen eingebrachten Faserbündel ein Minimum aufweist, das zwischen den mittleren Faserbündellängen des Verstärkungsfaserbündelanteils und des Matrixfaserbündelanteils liegt, daß die Faserbündellängen der in die Reibschicht eingebrachten Faserbündel deutlich kleiner als die Faserbündellängen der in den Tragkörper eingebrachten Faserbündel sind und daß die Faserbündel der Reibschicht im Mittel auch eine deutliche Ausrichtung senkrecht zur Oberfläche aufweisen, daß die Oberfläche der Außenseite der Reib- oder Gleitkörper zu einem größeren Anteil nur kleine Bereiche von maximal 1,2 mm Durchmesser freien Kohlenstoffs aufweist und der Gesamtanteil der Fläche freien Kohlenstoffs maximal 35 % der Oberfläche beträgt und daß die Oberfläche der Außenseite eine höchstens feine Rissstruktur aufweist sowie nahezu keine oberflächennahen Spannungen.

Weiterhin betrifft die Erfindung auch Herstellungsverfahren von Reib- oder Gleitkörpern aus mindestens zwei mit Faserbündeln verstärkten Verbundwerkstoffen mit keramischer Matrix, wobei ein erster Verbundwerkstoff als Reibschicht die Außenseite des Reib-oder Gleitkörpers bildet und ein zweiter Verbundwerkstoff als Tragkörper mit dem ersten flächig verbunden wird, bei denen zur Herstellung der beiden Verbundwerkstoffe verschiedene Anteile an Faserbündeln, ein Verstärkungsfaserbündelanteil und ein Matrixfaserbündelanteil, mit unterschiedlicher mittlerer Faserbündellänge im Herstellungsprozeß als Ausgangsstoffe benutzt werden, und zur Herstellung des Verbundwerkstoffs für die Reibschicht eine Mischung der beiden Faserbündelanteile mit einem Binder hergestellt wird, die nach dem Mischen zunächst granuliert wird.

Die erfindungsgemäßen Reib- oder Gleitkörper zeichnen sich dadurch aus, daß sie auch nach einem langen Einsatz unter sehr hohen Temperaturen in oxidativer Umgebung nahezu eine noch unversehrte Reiboberfläche der Reibschicht aufweisen.

Ermöglicht wird dies durch die spezielle Struktur, in der die Reibschicht mit dem Tragkörper verbunden ist. Sie weist zwar auch Risse durch die Verspannungen auf, die beim Abkühlen nach der Silicierung oder durch hohe Weiterhin betrifft die Erfindung auch Herstellungsverfahren von Reib- und Gleitkörpers aus mindestens zwei mit Faserbündeln verstärkten Verbundwerkstoffen mit keramischer Matrix, wobei ein erster Verbundwerkstoff als Reibschicht die Außenseite des Reib- oder Gleitkörpers bildet und ein zweiter Verbundwerkstoff als Tragkörper mit dem ersten flächig verbunden wird, bei denen zur Herstellung der beiden Verbundwerkstoffe verschiedene Anteile an Faserbündeln , ein Verstärkungsfaserbündelanteil und ein Matrixfaserbündelanteil, mit unterschiedlicher mittlerer Faserbündellänge im Herstellungsprozeß als Ausgangsstoffe benutzt werden, so daß die Gesamtfaserbündelverteilung bezüglich der Faserbündellänge der im Verbundwerkstoff eingebrachten Faserbündel ein Minimum aufweist, das zwischen den mittleren Faserbündellängen des Verstärkungsfaserbündelanteils und Matrixfaserbündelanteils liegt, die Faserbündellängen der in den ersten Verbundwerkstoffkörper eingebrachten Faserbündel deutlich kleiner als die Faserbündellängen der in den zweiten Verbundwerkstoffkörper eingebrachten Faserbündel sind und zur Herstellung des ersten Verbundwerkstoffs eine Mischung der beiden Faserbündelanteile mit einem Binder hergestellt wird, die nach dem Mischen zunächst granuliert wird.

Die erfindungsgemäßen Reib-und Gleitkörper zeichnen sich dadurch aus, daß sie auch nach einem langen Einsatz unter sehr hohen Temperaturen in oxidativer Umgebung nahezu eine noch unversehrte Reiboberfläche der Reibschicht aufweisen. Ermöglicht wird dies durch die spezielle Struktur, in der die Reibschicht mit den Trägerkörper verbunden ist. Sie weist zwar auch Risse durch die Verspannungen auf, die beim Abkühlen nach der Silizierung oder durch hohe Temperaturbeanspruchung entstehen, die reichen jedoch nur in begrenzten Maße an die Oberfläche der Reibschicht, wobei oft die Rißbreite im Übergangsbereich der Schichten wesentlich größer ist als in Oberflächennähe. Verstärkt wird die günstige Struktur der Reibschicht dadurch, daß die in ihr enthaltenen Faserbündel zu einem größeren Teil zu mindestens zum Teil senkrecht zur Oberfläche der Reibschicht ausgerichtet sind, wohingegen die Faserbündel im Trägermaterial nahezu parallel zur Grenzschicht der Schichten ausgerichtet sind. Es hat sich überraschenderweise gezeigt, daß die erfindungsgemäßen Reib- oder Gleitkörper aufgrund ihrer speziellen Zusammmensetzung und Herstellung eine Struktur im Verbundwerkstoff aufweisen, die nur eine geringere Schädigung der Oberfläche durch Ausbrennen und keine Abplatzungen der Reibschicht zuläßt. Wie der vorbeschriebene Stand der Technik zeigt, ist dies nur durch das Auffinden einer geeigneten Kombination von Merkmalen der Reib- und Gleitkörper möglich geworden.

Das ein Ausbrennen insbesondere von Faserbündeln an der Reiboberfläche bei den erfindungsgemäßen Reib-oder Gleitkörpern nur in sehr gegrenzten Maße möglich ist, zeigt sich an dem Anteil der Reiboberfläche, die womöglich durch mechanisches Nacharbeiten erhalten wurde, der aus Kohlenstoff besteht. Bei den erfindungsgemäßen Reib- und Gleitkörpern liegt dieser üblicherweise zwischen 2 % und 35 % der Fläche der Oberfläche, bevorzugt zwischen 5 % und 30 % und besonders bevorzugt zwischen 15 % und 25 % der Fläche der Oberfläche. Außerdem ist der Anteil der Oberfläche, die größere Bereiche freien Kohlenstoffs an der Oberfläche aufweist, gering. So weisen üblicherweise zwischen 1,5 % und 30 % der Fläche der Oberfläche, bevorzugt zwischen 4 % und 25 % und besonders bevorzugt zwischen 12 % und 20 % der Fläche der Oberfläche Bereiche freien Kohlenstoffs an der Oberfläche auf, die einen Maximaldurchmesser von mindestens 1,2 mm aufweisen.

Es zeichnet die Erfindung aus, daß die bisher bekannten Verfahren zur Herstellung von CMC-Verbundwerkstoffen zur Herstellung der mindestens zwei Verbundwerkstoffe eingesetzt werden können, wenn statt bisher nur einem Faser- bzw. Faserbündelanteil ein Verstärkungsfaserbündelanteil und einen Matrixfaserbündelanteil in die Verbundwerkstoffe eingebracht werden und zur Herstellung der Reibfläche die beide Faserbündelänteile enthaltende Mischung nach ihrer Herstellung granuliert wird. Die bekannten Vorteile der bisherigen Herstellungsverfahren geraten so nicht ins Hintertreffen.

Die erfindunggemäßen Reib-und Gleitkörper weisen verschiedene Schichten von mit Faserbündel verstärkten Verbundwerkstoffen auf, wobei es sich im einfachsten Falle um einen Tragkörper handelt, auf dem sich einseitig eine Reibschicht befindet, was zum Beispiel oft bei Gleitlagerelementen der Fall ist. Oft jedoch weist der Tragkörper jedoch auf beiden Seiten eine Reibschicht auf, die zumeist aus dem gleichen Verbundwerkstoff besteht. Eine derartige Struktur wird z.B. als Bremsscheibe eingesetzt. Die verschiedenen Verbundwerkstoffe, aus den die Reib-oder Gleitkörper zusammengesetzt sind, können an ihrer gemeinsamen Grenzfläche einen scharfen und einen ineinander übergehenden Übergang aufweisen. Weiterhin können zwischen der außen liegenden Reibschicht und dem Tragkörper auch noch ein oder mehrere Übergangsschichten angeordnet sein, um so eine verbesserte Anpassung der Materialparameter wie insbesondere des thermischen Ausdehnungskoeffizienten, von Tragschicht und Reibschicht zu erhalten. Hierdurch kann erreicht werden, daß die Reibschicht nahezu spannungsfrei an dem inneren Träger angebracht ist.

Die Geometrie der Reibkörper kann beliebige Formen aufweisen, wesentlich ist jedoch ein flächiger Kontakt zwischen den einzelnen Schichten, wobei jedoch am Kontakt sowohl die Fläche der Reibschicht die des Trägerkörpers überragen kann als auch umgekehrt. Ebenso ist es denkbar, daß mehrere Reibschichtelemente nebeneinander auf dem Trägerkörper angeordnet sind.

Bei Bremsscheiben, die ein-oder beidseitig mit Reibschichten versehen sind, wird die Dicke jeder Reibschicht üblicherweise zwischen 1 % und 25 % der Dicke der gesamten Bremsscheibe gewählt, bevorzugt zwischen 3 % und 15 % und besonders bevorzugt zwischen 5 % und 12 % der Dicke der gesamten Bremsscheibe.

Die Faserbündel, die die erfindungsgemäßen Reib-und Gleitkörper beinhalten oder die im erfindungsgemäßen Verfahren zur Herstellung der Reib-und Gleitkörper eingesetzt werden, weisen vorteilhafterweise eine Schutzschicht auf, um sie vor einem zu starken Angriff beim Reagieren mit dem Matrixsystem zu schützen, damit sie ihre Verstärkungseigenschaften nicht verlieren. Ein weiterhin verbesserter Schutz der in den erfindungsgemäßen Reib-und Gleitkörper eingebundenen Faserbündel kann durch mehrere womöglich verschiedene Schutzschichten übereinander erreicht werden. Die bevorzugt benutzten Schutzschichten bestehen aus Kohlenstoff, Graphit, Pyrokohlenstoff, TiC, TiN, SiC, Titandiborid, Zirkoniumdiborid, Hafniumdiborid, Verbindungen auf der Basis von Si,B,C,N und Mischungen davon. Ein anderer oder zusätzlicher Faserbündelschutz kann dadurch erreicht werden, daß bei der Herstellung eingebrachten Faserbündel mindestens mit einer Schicht eines pyrolysierbaren Bindemittels beschichtet sind, das verfestigt oder ausgehärtet wurde. Insbesondere können derart beschichtete Faserbündel auch in den erfindungsgemäßen Herstellungsverfahren verwendet werden. Die Schutzschicht wird während der Herstellung der einzelnen Verbundwerkstoffe der erfindungsgemäßen Reib-oder Gleitringe pyrolysiert. Die Schutzschichten der Faserbündel von Tragkörper und Reibfläche könnnen unterschiedlich sein, bevorzugt sind sie jedoch wegen der einfacheren Herstellung gleich.

Zur Verstärkung der erfindungsgemäßen Reib-und Gleitkörper und bei den erfindungsgemäßen Herstellungsverfahren können alle hochtemperaturbeständigen Fasern, insbesondere jedoch Kohlenstoffasern, Graphitfasern, SiC- Fasern, Aluminiumoxidfasern, Al₂O₃SiO₂ -Fasern, Al₂O₃SiO₂B₂O₃- Fasern, carbonisierte Formen von Cellulosefasern, Holzfasern und anderen organischen Fasern, sowie hochwarmfesten Fasern auf der Basis von Verbindungen, die Si,C,B,N,Al enthalten, verwendet werden. Ebenso können statt der in den Faserbündeln enthaltenen Fasern auch Nanofasern, Whisker und Nanoröhrchen zur Verstärkung der CMC-Verbundwerkstoffe und bei deren Herstellung benutzt werden.

Wesentlich beitragen zu der hohen Beständigkeit der oberfläche der Reibschichten tut auch die richtige Wahl der verstärkenden Faserbündel. Zum einen weisen die Verbundwerkstoffe zwei verschiedene Faserbündelfraktionen unterschiedlicher Faserbündellänge, was gemäß der noch nicht offengelegten deutschen Patentanmeldung 199 44 345.9 zu einer verbesserten Struktur der Matrix der Verbundwerkstoffe führt und zum anderen die Tatsache, daß in der Reibschicht kürzere Faserbündel als in dem Tragkörper eingesetzt werden. Bevorzugt weisen die kürzeren Faserbündel jedoch die gleiche Schutzschicht auf wie die Faserbündel der Tragschicht, so daß sie ihren verstärkenden Charakter nicht durch z.b. eine Silizierung verlieren. Besonders bevorzugt handelt es sich bei der Schutzschicht der Faserbündel um eine Kohlenstoffschicht, die graphitiert wurde.

Bevorzugte Varianten der erfindungegemäßen Reib-und Gleitkörper besitzen Faserbündel zur Verstärkung, die sich durch die folgenden Merkmale auszeichnen.

Diese in den einzelnen Verbundwerkstoffen enthaltenen Faserbündel sollen im folgenden und den Ansprüchen durch sogenannte Faserbündelverteilungen beschrieben werden. Hierunter ist im weiteren die Massenverteilung der im jeweiligen Verbundwerkstoff enthaltenen Faserbündel bezogen auf die Länge der Faserbündel zu verstehen, d.h., der Verteilung ist zu entnehmen, welche Masse die Faserbündel einer bestimmten Faserbündellänge besitzen bzw. welchen Massenanteil die Faserbündel einer bestimmten Faserbündellänge an der gesamten Masse der Faserbündel besitzen.

Die Faserbündelverteilungen zeichnen sich insbesondere durch folgende Eigenschaften aus:
Die mittlere Faserbündellänge des Verstärkungsfaserbündelanteils des Tragkörpers liegt üblicherweise zwischen 4 mm und 20 mm, bevorzugt zwischen 5 mm und 16 mm und besonders bevorzugt zwischen 6 mm und 12 mm.
Die mittlere Faserbündellänge des Matrixfaserbündelanteils des Tragkörpers liegt üblicherweise zwischen 0,2 mm und 5 mm, bevorzugt zwischen 0,5 mm und 4 mm und besonders bevorzugt zwischen 1 mm und 3,5 mm.
Die mittlere Faserbündelbreite des Verstärkungsfaserbündelanteils des Tragkörpers liegt üblicherweise zwischen 0,02 mm und 5 mm, bevorzugt zwischen 0,1 mm und 3 mm und besonders bevorzugt zwischen 0,5 mm und 2 mm.
Die mittlere Faserbündelbreite des Matrixfaserbündelanteils des Tragkörpers liegt üblicherweise zwischen 0,02 mm und 2 mm, bevorzugt zwischen 0,1 mm und 1 mm und besonders bevorzugt zwischen 0,3 mm und 0,7 mm.
Die mittlere Faserbündellänge des Verstärkungsfaserbündelanteils der Reibschicht liegt üblicherweise zwischen 0,5 mm und 8 mm, bevorzugt zwischen 1 mm und 6 mm und besonders bevorzugt zwischen 2 mm und 4 mm.
Die mittlere Faserbündellänge des Matrixfaserbündelanteils des Reibschicht liegt üblicherweise zwischen 0,25 mm und 4 mm, bevorzugt zwischen 0,5 mm und 3 mm und besonders bevorzugt zwischen 1 mm und 2 mm.
Die mittlere Faserbündelbreite des Verstärkungsfaserbündelanteils der Reibschicht liegt üblicherweise zwischen 0,01 mm und 1,5 mm, bevorzugt zwischen 0,1 mm und 1 mm und besonders bevorzugt zwischen 0,3 mm und 0,7 mm.
Die mittlere Faserbündelbreite des Matrixfaserbündelanteils der Reibschicht liegt üblicherweise zwischen 0,001 mm und 0,6 mm, bevorzugt zwischen 0,05 mm und 0,4 mm und besonders bevorzugt zwischen 0,1 mm und 0,2 mm.

Das Verhältnis der mittleren Faserbündellänge des Verstärkungsfaserbündelanteils zur mittleren Faserbündellänge des Matrixfaserbündelanteils des Tragkörpers beträgt üblicherweise zwischen 1,5 und 10, bevorzugt zwischen 1,8 und 7 und besonders bevorzugt zwischen 2,1 und 5.

Das Verhältnis der mittleren Faserbündellänge des Verstärkungsfaserbündelanteils zur mittleren Faserbündellänge des Matrixfaserbündelanteils der Reibschicht beträgt üblicherweise zwischen 1,35 und 7, bevorzugt zwischen 1,5 und 5 und besonders bevorzugt zwischen 1,8 und 2,3.

Das Verhältnis der mittleren Faserbündellänge des Verstärkungsfaserbündelanteils des Tragkörpers zur mittleren Faserbündellänge des Verstärkungsfaserbündelanteils der Reibschicht beträgt üblicherweise zwischen 2 und 15, bevorzugt zwischen 3 und 10 und besonders bevorzugt zwischen 5 und 8.

Das Verhältnis der mittleren Faserbündellänge des Matrixfaserbündelanteils des Tragkörpers zur mittleren Faserbündellänge des Matrixfaserbündelanteils der Reibschicht beträgt üblicherweise zwischen 1,3 und 12, bevorzugt zwischen 1,5 und 7 und besonders bevorzugt zwischen 2 und 4.

Die keramische Matrix der mindestens zwei Verbundwerkstoffe der erfindungsgemäßen Reib-und Gleitkörper weist jeweils bevorzugt mindestens eine Phase von mindestens einem der Stoffe Kohlenstoff, Silicium, Bor, Aluminium, Zirkonium, und/oder der Legierungen aus der Gruppe Siliciumcarbid, Siliciumnitrid, Siliciumoxid, Bornitrid, Borcarbid, SiBCN, Al₂O₃, ZrO₂, TiC, Eisensilicide und anderer Silicide sowie Glaskeramiken auf, wobei die beiden Verbundwerkstoffe bevorzugt nahezu die gleichen Phasen aufweisen. Besonders bevorzugt weisen zwei Verbundwerkstoffe der erfindungsgemäßen Reib-und Gleitkörper die gleiche Matrix aus nahezu nur einem der oben genannten Stoffe und Legierungen auf und nur sehr wenig Bereiche mit einer der Hauptphase naheliegenden Verbindung. D.h., daß bei einer Legierung als Matrix nur geringe Anteile der Phasen der einzelnen Legierungsbestandteile in der Matrix vorhanden sind. Weiterhin kann die keramische Matrix der zwei Verbundwerkstoffe der erfindungsgemäßen Reib-und Gleitkörper auch Zusätze von Eisen, Chrom, Titan, Molybdän, Nickel oder Aluminium beinhalten.

CMC-Verbundwerkstoffe, die heute schon für technische Aufgaben hoher Anforderungen eingesetzt werden, beinhalten bevorzugt Kohlenstoff- und Graphitfasern, da diese in großtechnischen Maßstäben verfügbar sind. Sie werden zumeist auf der Basis von PAN-Fasern, Pechfasern, Mesophasenpech, Viscosefasern, Phenolfasern, Polyphenylenfasern und Hohlfasern durch Pyrolyse hergestellt. Daher sind auch erfindungsgemäße Reib-und Gleitkörper bevorzugt mit Kohlenstoff- oder Graphitfaserbündeln verstärkt, bzw. in den erfindungsgemäßen Herstellungsverfahren bevorzugt Kohlenstoff- und Graphitfaserbündel zu verwenden.

Die erfindungsgemäßen Reib-und Gleitkörper zeigen ihre Eigenschaften besonders ausgeprägt, wenn es sich bei den mindestens zwei Verbundwerkstoffen um C/SiC-Verbundwerkstoffe, also Werkstoffe, deren keramische Matrix im wesentlichen Phasen von Silicium, Kohlenstoff und Silicumcarbid beinhaltet, handelt.

Bei den meisten erfindungsgemäßen Herstellungsverfahren werden zur Herstellung der beiden Verbundwerkstoffe jeweils die zwei verschiedene Anteile an Faserbündeln während eines Mischungsprozesses anderen Komponenten zur Herstellung des Verbundwerkstoffs zugesetzt. Bevorzugt werden die zwei verschiedene Anteile an Faserbündeln während des Mischungsprozesses mit mindestens einem carbonisierbaren Bindemittel vermischt. Als Füllmittel werden außerdem vor allem Kohlenstoffpartikel, Ruß, Kokse, Graphit, Silicium, Carbide, Nitride, Eisensilicide und andere Silicide sowie Boride zugesetzt. Zusätzlich können während des Mischungsprozesses auch andere Bindemittel z.B. aus der Gruppe der Polyvinylalkohole, Methyl-, Ethyl- und Buthylcellulosen zugesetzt werden. Die Mischung für die Herstellung der Reibschicht wird dann anschließend einem Granulierungsprozeß unterzogen.

Das Granulieren der Mischung für die Reibschicht erfolgt bevorzugt in einem Pflugscharmischer mit oder ohne Messerkopf, einem Wirbelschichtmischer, einer Mischtrommel mit oder ohne Pelletierteller oder in mehreren dieser Anlagen hintereinander. Das hierbei anfallende Granulat wird entweder anschließend direkt zu einem Formkörper verpresst oder zunächst aufgesiebt. Überlicherweise werden dann Granulate mit einem mittleren Durchmesser von 0,25 mm bis 8 mm, bevorzugt von 0,8 mm bis 4 mm und besonders bevorzugt von 1,5 mm bis 3 mm verpresst.

Bei den carbonisierbaren Bindemittel werden bevorzugt Bindemittel aus der Gruppe der Harze und Peche eingesetzt. Unter den Harzen werden vor allem Harze aus der Gruppe der Thermoplaste, Phenolharze, Furanharze, Polyacrylatharze, Polyimidharze, Cyanatharze und Epoxidharze benutzt. Als Peche werden vor allem Fest- und Flüssigpeche, Mesosphasenpeche, Steinkohlenteerpeche und Petrolpeche eingesetzt. Als carbonisierbare Bindemittel können aber z.B. auch Bindemittel aus der Gruppe der Polysilane, Polycarbosilane , Polysilazane, Mono- und Polysaccharide, Polyallylcarbodiimide, Polysillylcarbodiimide, Öle und Teere eingesetzt werden.

Der Masseanteil der beim Mischprozeß eingebrachten Faserbündel beträgt für den Trägerkörper üblicherweise insgesamt 50 bis 99 % der Gesamtmasse der Mischung, bevorzugt 60 bis 90 % und besonders bevorzugt 65 bis 80 % der Gesamtmasse der Mischung und für die Reibschicht üblicherweise insgesamt 35 bis 90 % der Gesamtmasse der Mischung, bevorzugt 45 bis 85 % und besonders bevorzugt 60 bis 80 % der Gesamtmasse der Mischung.

Der Masseanteil der beim Mischprozeß eingebrachten Faserbündel des Verstärkungsfaserbündelanteils beträgt für den Trägerkörper üblicherweise 20 bis 80 % der Gesamtmasse der Mischung, bevorzugt 35 bis 65 % und besonders bevorzugt 42 bis 55 % der Gesamtmasse der Mischung und für die Reibschicht üblicherweise insgesamt 0 bis 55 % der Gesamtmasse der Mischung, bevorzugt 15 bis 45 % und besonders bevorzugt 30 bis 40 % der Gesamtmasse der Mischung. Eine erfindungsgemäße Variante der Reib-oder Gleitkörper besteht also auch darin, daß die äußeren Reibschichten zumindestens teilweise nur Matrixfaserbündel beinhalten und keinen zweiten Anteil an längeren Verstärkungsfaserbündeln.

Der Masseanteil der beim Mischprozeß eingebrachten Faserbündel des Matrixfaserbündelanteils beträgt für den Trägerkörper üblicherweise 10 bis 40 % der Gesamtmasse der Mischung, bevorzugt 15 bis 35 % und besonders bevorzugt 20 bis 30 % der Gesamtmasse der Mischung und für die Reibschicht üblicherweise insgesamt 12 bis 55 % der Gesamtmasse der Mischung, bevorzugt 20 bis 45 % (?)und besonders bevorzugt 30 bis 40 % (?)der Gesamtmasse der Mischung.

Die durch Mischvorgang erhaltene Mischung für den Trägerkörper und das durch den Granulierprozeß erhaltene Granulat zur Herstellung der Reibschicht werden zumeist anschließend verdichtet. Dieses Verdichten erfolgt bevorzugt in einer Gesenkpresse, isostatischen Presse, Stranggußpresse, Kolbenhubpresse oder einem Extruder, z.B. Schneckenextruder. Hierbei stellt der Fachmann den auf die Mischung wirkenden Druck mit seinem Wissen über Verdichtungsvorgänge so ein, daß er am Ende der Herstellungsverfahren zu den geeigneten Verbundwerkstoffen für die erfindungsgemäßen Reib-und Gleitkörper gelangt. Dieses Verdichten der Mischung bzw. des Granulats erfolgt bevorzugt bei erhöhter Temperatur, wenn Harze als Bindemittel in der Mischung vorhanden sind besonders bevorzugt bei Temperaturen oberhalb der Aushärtungstemperatur der Harzbinder. Es ist aber auch möglich, die verdichteten Formkörper erst anschließend einer Temperaturbehandlung zu unterziehen. So ist es bei Harzen als Bindemittel auch möglich, nach dem Verdichten die Formkörper einer Temperaturbehandlung oberhalb der Aushärtungstemperatur der Harzbinder zu unterziehen, um dadurch die Formkörper auszuhärten.

Bei erfindungsgemäßen Herstellungsverfahren zur Herstellung von Reib-oder Gleitkörpern, deren Matrix Kohlenstoff und/oder Carbide beinhaltet, wie Z.B. C/SiC-Verbundwerkstoffen, werden zumeist in einem weiteren Verfahrensschritt die Bindemittel in den erhaltenen Formkörpern carbonisiert.

Weiterhin können die erfindungsgemäßen Herstellungsverfahren auch Verfahrensschritte beinhalten, bei denen ein ein- oder mehrfach mittels CVI-Prozeß oder Imprägnierung carbonisierbare Substanzen in das Porensystem der herzustellenden Verbundwerkstoffe eingebracht werden und die herzustellenden Verbundwerkstoffe anschließend einem Carbonisierungsschritt ausgesetzt wird. Bevorzugt werden diese Verfahrenschritte dann eingesetzt, wenn die erfindungsgemäßen Reib-oder Gleitkörper aus CMC-Verbundwerkstoffen, deren Matrix Kohlenstoff und/oder Carbide beinhaltet, hergestellt werden sollen.

An den oben beschriebenen Carbonisierungschritten der Verbundwerkstoffe kann sich als ein weiterer Verfahrenschritt die Graphitierung der carbonisierten Vorprodukte bei Temperaturen über 2000 °C anschließen.

Hiernach folgt zumeist eine mechanische Bearbeitung der erhaltenen Formteile, um ihnen die endgültige Geometrie von Tragkörper und Reibschichten zu geben.

Spätestens im Anschluß an diesen Verfahrenschritt werden die verschiedenen Verbundwerkstoffe der erfindungsgemäßen Reib-und Gleitkörper miteinander verbunden. Bereits beim Verpressen der Preßmasse des Tragkörpers und des Granulats für die Reibschicht kann eine stoffschlüssige Verbindung durch ein gemeinsames Verpressen hergestellt werden. Der hierbei entstehende Verbund durchläuft anschließend die üblichen Prozeßschritte der Herstellungsverfahren von CMC-Formkörpern nach dem Verpressen. Ebenso können Tragkörper und Reibschicht nach dem Aushärten der Bindemittel als CFK-Formkörper oder nach den Carbonisieren bzw. Graphitieren als CFC- Formkörper verbunden werden. Die Verbindung kann z.B. durch Verkleben erfolgen, üblicherweise mit carbonisierbaren Klebern, bevorzugt mit Harzen und Pechen aus der Gruppe der Thermoplaste, Phenolharze, Furanharze, Polyacrylatharze, Polyimidharze, Cyanatharze, Epoxidharze, Fest- und Flüssigpeche, Mesosphasenpeche, Steinkohlenteerpeche und Petrolpeche und Mischungen davon. Besonders bevorzugt sind dem verwendeten Kleber Faserbündel, insbesondere Kohlenstoff- und Graphitfaserbündel beigemischt, deren Länge bevorzugt nahezu der Länge der Matrixfasern der Reibschicht entspricht. Werden CFC-Formkörper miteinander verbunden, so erfolgt anschließend ein zumindestens ein weiterer Carbonisierungsschritt, während beim Verbinden von CFK- Formkörpern die Carbonisierung des Klebers üblicherweise gemeinsam mit der der Formteile erfolgt. Eine andere Verbindungsvariante besteht darin, daß die CFC- Formteile von Tragkörper und Reibschicht aufeinander gelegt werden oder zusammengehalten werden und dann bei einer abschließenden Silizierung die SiC- Bildung in der Matrix zu einer schlüssigen Verbindung führt, wobei hierdurch die Werkstoffe von Tragkörper und Reibschicht ineinander übergehen können.

Erfindungsgemäße Herstellungsverfahren von Reib-oder Gleitkörpern mit Verbundwerkstoffen, deren Matrix auch Silicum und/oder Silicide beinhaltet, wie z.B. C/SiC-Verbundwerkstoffe, beinhalten nach dem Verbinden von Trägerkörper und Reibschicht bevorzugt einen abschließenden Verfahrensschritt, indem eine Silicierung vorgenommen wird. Diese abschließende Silicierung kann durch die Infiltration von flüssigem Silicium oder Siliciumlegierungen aus der Gruppe der Eisen-, Chrom-, Titan-, Molybdän-, Nickel- und Aluminiumsilicide oder die CVI-Abscheidung von Silicium, Siliciumcarbid, oder anderen Siliciumverbindungen vorgenommen werden. Nach der Silizierung kann der Übergang zwischen Tragkörper und Reibschicht weiter sehr scharf markiert sein, aber auch ineinander übergehen.

Eingesetzt werden die erfindungsgemäßen Reib-und Gleitkörper als Bremsscheiben und Bremsbeläge insbesondere für Maschinen, Luftfahrzeuge, Schienenfahrzeuge und Kraftfahrzeuge und Komponenten von Gleitlagern und Gleitelementen.

### Beispiele

Im folgenden sollen exemplarisch das Verhalten von Bremsscheiben verglichen werden, die zum einen (Beispiel 1) nur aus einem C/SiC- Verbundwerkstoff gemäß der noch nicht offengelegten deutschen Patentanmeldung der Anmeldenummer 199 44 345.9 bestehen und zum anderen (Beispiel 2) als erfindungsgemäße Bremsscheiben aus dem Verbundwerkstoff der Vergleichsprobe als Tragkörper und zwei Reibschichten, die auf beiden Seiten des Tragkörpers angebracht sind, hergestellt wurden.

Die beschriebenen Bremsscheiben bestehen aus C/SiC-Verbundwerkstoffen. Es handelt sich jedoch bei C/SiC-Verbundwerkstoffen nur um ein Beispiel für die erfindungsgemäßen Reib-oder Gleitkörper, die auch aus anderen CMC-Verbundwerkstoffen bestehen können. Gemäß den obigen Erläuterungen sind ähnliche Ergebnisse auch mit anderen CMC-Systemen zu beobachten.

Die Bremsscheibe des Vergleichsbeispiels 1 besteht aus einem C/SiC- Verbundwerkstoff, der auf der Basis der noch nicht offengelegten deutschen Patentanmeldung der Anmeldenummer 199 44 345.9 und dem in der Offenlegungsschrift DE 197 10 105 offenbarten Herstellungsverfahren hergestellt wurde.

Der Tragkörper der erfindungsgemäßen Bremsscheiben des Beispiels 2 besteht aus dem gleichen C/SiC- Verbundwerkstoff wie die Bremsscheiben des Vergleichsbeispiels 1, ist jedoch mit jeweils einer Reibschicht auf beiden Außenseiten verbunden. In diesem werden erfindungsgemäß Faserbündel anderer Faserlängen zur Verstärkung eingesetzt.

Die Bremsscheibe des Vergleichsbeispiels 1 bzw. der Tragkörper des Beispiels 2 und die Reibschichten des Beispiels 2 wiesen die folgende Faserbündelanteile auf:

**Tabelle 1: Zusammensetzung der Faserbündelanteile der Beispiele**

| | Matrixfaserbündelanteil | | Verstärkungsfaserbündelanteil | |
|---|---|---|---|---|
| Beispiel | Faserbündelmasse [%] | mittlere Faserbündellänge [mm] | Faserbündelmasse [%] | mittlere Faserbündellänge [mm] |
| 1 Tragkörper von 2 | 30 | 3 ± 1,5 | 12 | 15 ± 2,55 |
| | | | 18 | 11 ± 2,5 |
| | | | 40 | 8 ± 2,5 |
| Reibschicht von 2 | 50 | 1,5 ± 0,6 | 50 | 3 ± 1,5 |

Die in die Beispiele eingebrachten Faserbündelanteile wiesen hierbei die folgenden Faserbündeldicken auf:

**Tabelle 2: Abmessungen der einzelnen Faserbündelfraktionen der Beispiele**

| mittlere Faserbündellänge [mm] | Mittlere Faserbündeldicke [mm] |
|---|---|
| 1,5 ± 0,5 | 0,15 ± 0,1 |
| 3 ± 1,5 | 0,5 ± 0,4 |
| 8 ± 2,5 | 1,46 ± 0,7 |
| 11 ± 2,5 | 1,46 ± 0,75 |
| 15 ± 2,55 | 1,46 ± 0,8 |

Die Bremsscheiben der beiden Beispiele wurden wie folgt hergestellt:
Zunächst wurde ein Prepreg aus 3K-Kohlenstoffaserbündeln (3000 Einzelfilamente) hergestellt, wobei die Kohlenstoffasern auf der Basis von PAN-Fasern hergestellt worden sind. Hierzu wurden die Faserbündel zu einem Köpergewebe verflochten, anschließend das Gewebe in Phenolharz (Resol-Typ) getränkt und mit einem Trennpapier auf beiden Seiten versehen. Danach wurde das harzgetränkte-Gewebe auf 130 °C erhitzt, um die Klebrigkeit des Prepegs herzustellen.

Anschließend wurden die Prepregplatten übereinandergelegt und zu einem Preßkörper verpreßt. Dieser wurde anschließend bei 900 °C gebrannt, wobei die Brennkurve im Bereich zwischen 400 °C und 600 °C eine Steigung von 5 °C pro Minute aufwies. Anschließend wurde der so erhaltene CFC-Körper dreimal hintereinander zunächst jeweils mit einem Steinkohlenteerpech mit einem Erweichungspunkt von 60 °C imprägniert und dann ebenfalls bei 900 °C gebrannt, um ihn weiter zu verdichten.

Der so erhaltene CFC-Körper wurde danach zunächst in einem Backenbrecher (Hersteller: Fa. Alpine Hosokawa) zerkleinert und anschließend in einer Schneidmühle (Hersteller: Fa. Alpine Hosokawa) in Faserbündel zerschnitten. Abschließend wurden die Faserbündel in einer Taumelsiebanlage (Hersteller Fa. Allgaier) in einzelne Faserbündelfraktionen sortiert, wobei die Siebeeinsätze (Siebfläche 1,15 m²) eine lichte Maschenweite von 0,5 mm, 1 mm, 2 mm, 3 mm, 4 mm und 6 mm aufwiesen gemäß ISO 9044. Als Ergebnis dieses Siebprozesses wurden die oben beschriebenen Faserbündelfraktionen erhalten, wobei der Wert hinter dem ±-Zeichen jeweils die halbe Halbwertsbreite der einzelnen Fraktionen angibt, die der Faserbündelverteilung der Masse der Faserbündel der einzelnen Faserbündelfraktionen bezüglich der Faserbündellänge und Faserbündelbreite zu entnehmen sind.

Danach wurden für das Beispiel 1 und den Tragkörper des Beispiels 2 eine Mischung A aus 70 % der Gesamtmasse Faserbündeln gemäß der oben angegebenen Zusammensetzung und als Bindemittel 21 % der Gesamtmasse Phenolharz (Resol-Typ) und 9 % der Gesamtmasse Steinkohlenteerpech (Erweichungspunkt: 230 °C) in einem Z-Arm-Kneter (Hersteller: Fa. Werner & Pfleiderer) hergestellt. Anschließend wurden die Mischungen in einer Gesenkpresse bei einem spezifischen Druck von 12 Kp/cm² und einer Temperatur von 130 °C zu einem Formkörper entsprechend der benötigten Geometrie der Bremsscheibe verpreßt, wobei der Tragkörper entsprechend dünner war, um auf ihm später die Reibschichten auf beiden Seiten anzubringen. Danach erfolgte die Carbonisierung der Proben bei 900 °C unter Schutzgas.

Für die Reibschichten des Beispiels 2 wurde zunächst eine Mischung B aus 70 % der Gesamtmasse Faserbündeln gemäß der oben angegebenen Zusammensetzung und 30 % der Gesamtmasse Phenolharz (Novolak- Typ) durch einminütiges Mischen in einem Mischer das Fa. Eirich (Deutschland) vom Typ R02-E bei einer Drehzahl von 1000 U/min hergestellt, die sofort anschließend in dem Mischer durch Erhöhung der Drehzahl auf 2000 U/min unter steter Zugabe einer 2 % wässrigen Polyvinylalkohollösung innerhalb von 4 Minuten in ein Granulat umgewandelt wird. Durch einem Siebprozeß werden die Granulatkörner mit einem Korndurchmesser größer 3 mm von Granulat abgetrennt und anschließend das so erhaltene Granulat mit maximaler Korngröße 3 mm in einer Gesenkpresse unter einem spezifischen Preßdruck von 9 Kp/cm² zu Scheiben der Dicke 3 cm und einer Temperatur von 130 °C verpreßt. Auch in diesem Fall erfolgte die Carbonisierung der Scheiben bei 900 °C unter Schutzgas.

Die erhaltenen Formkörper für die Bremsscheiben des Beispiels 1, Formkörper für die Tragkörper des Beispiels 2 und die Scheiben für die Reibringe des Beispiels 2 werden werden anschließend mechanisch bearbeitet, um ihnen ihre endgültige Geometrie zu geben.

Zur Herstellung der Bremsscheiben des Beispiels 2 wurden die so erhaltenen CFC- Tragkörper und Reibringe anschließend mit einer faserhaltigen Masse verklebt, wobei jede Seite des Tragkörpers jeweils mit einer Reibschicht versehen wurde. Die faserhaltige Masse besteht zu 70 Gewichtsprozent aus einem Phenolharz vom Resol-Typ und zu 30 Gewichtsprozent aus Faserbündeln der Faserbündelfraktion mit der mittleren Faserbündellänge 1,5 mm. Der so erhaltene Verbundkörper wird anschließend erneut bei 900 °C unter Schutzgas carbonisiert.

Abschließend erfolgte die Infiltrierung der CFC-Bremsscheibenkörper beider Beispiele bei 1700°C mit flüssigem Silicium im Vaküum unter einem Siliciumangebot des Anderthalbfachen der Probenmasse, wodurch die SiC-Struktur der Matrix der Bremsscheiben erzeugt wird.

Bei der Betrachtung der Oberfläche der Bremsscheiben beider Beispiele ist eine deutlich unterschiedliche Oberflächenstruktur zu beobachten. Während die Bremsscheiben des Vergleichsbeispiels 1 an der Oberfläche lediglich Faserbündel parallel zur Oberfläche aufweisen, sind bei den erfindungsgemäßen Bremsscheiben des Beispiels 2 auch Faserbündel zu erkennen, die zumindestens in die Reibschicht weiter hineinragen und zum Teil sogar in ihrem Querschicht an der Oberfläche zu beobachten sind.

Von Interesse ist jedoch besonders die Struktur der Oberfläche der Bremsscheiben, wenn sie dauerhaften Beanspruchungen im Kraftfahrzeug ausgesetzt waren, insbesondere wenn hierbei hohe Temperaturen auftraten (z.B. Bergfahrten, Rennbedingungen). Hier zeigt sich der wesentliche Unterschied zwischen den beiden Beispielen 1 und 2. Während die Oberfläche der bisherigen homogenen Bremscheiben mit der Zeit eine sehr rauhes Profil aufwiesen, insbesondere durch ein Ausbrennen der Faserbündel, erscheint die Oberfläche der erfindungsgemäßen Bremsscheiben auch nach intensiver Nutzung nahezu eben und glatt. Zwar sind auch hier Ausbrennungen von Faserbündeln nicht zu vermeiden, jedoch treten diese in wesentlich verringertem Maße und zumeist mit verringerten Abmessungen auf, so daß nahezu die gesamte Oberfläche als Reibfläche erhalten bleibt. Überraschenderweise gelang es mit den erfindungs-gemäßen Bremsscheiben nicht nur die Rauheit der Bremsscheibenoberfläche durch Ausbrennungen fast vollständig zu vermeiden, es war auch sichergestellt, daß keine Abplatzungen der Oberfläche trotz großer thermischer Beanspruchung auftraten. Damit wurde erstmals das Problem bisheriger Bremsscheiben, die Tragkörper und Reibschicht aufwiesen, gelöst. Weiterhin wurden die Eigenschaften bisheriger einteiliger C/SiC- Bremsscheiben nahezu unverändert erreicht.

## Patentansprüche

1. Reib- oder Gleitkörper aus mindestens zwei mit Faserbündeln verstärkten Verbundwerkstoffen mit keramischer Matrix, wobei ein erster Verbundwerkstoff als Reibschicht die Außenseite des Gleitkörpers bildet und ein zweiter Verbundwerkstoff als Tragkörper mit der Reibschicht flächig verbunden ist, **dadurch gekennzeichnet, daß** die mindestens zwei Verbundwerkstoffe verschiedene Anteile an Faserbündeln, einen Verstärkungsfaserbündelanteil und einen Matrixfaserbündelanteil, mit unterschiedlicher mittlerer Faserbündellänge aufweisen, wobei die mittlere Faserbündellänge des Verstärkungsfaserbündelanteils des Tragkörpers zwischen 4 mm und 20 mm liegt, die mittlere Faserbündellänge des Matrixfaserbündelanteils des Tragkörpers zwischen 0,2 mm und 5 mm liegt, die mittlere Faserbündellänge des Verstärkungsfaserbündelanteils der Reibschicht zwischen 0,5 mm und 8 mm liegt, und die mittlere Faserbündellänge des Matrixfaserbündelanteils der Reibschicht zwischen 0,25 mm und 4 mm liegt.

2. Reib- oder Gleitkörper gemäß Anspruch 1, **dadurch gekennzeichnet, daß** das Verhältnis der mittleren Faserbündellänge des Verstärkungsfaserbündelanteils des Tragkörpers zur mittleren Faserbündellänge des Verstärkungsfaserbündelanteils der Reibschicht zwischen 2 und 15 beträgt.

3. Reib- oder Gleitkörper gemäß Anspruch 1, **dadurch gekennzeichnet, daß** das Verhältnis der mittleren Faserbündellänge des Matrixfaserbündelanteils des Tragkörpers zur mittleren Faserbündellänge des Matrixfaserbündelanteils der Reibschicht zwischen 1,3 und 12 beträgt.

4. Reib- oder Gleitkörper gemäß Anspruch 1, **dadurch gekennzeichnet, daß** die mittlere Faserbündelbreite des Verstärkungsfaserbündelanteils des Tragkörpers zwischen 0,02 mm und 5 mm liegt.

5. Reib- oder Gleitkörper gemäß Anspruch 1, **dadurch gekennzeichnet, daß** die mittlere Faserbündelbreite des Matrixfaserbündelanteils des Tragkörpers zwischen 0,02 mm und 2 mm liegt.

6. Reib- oder Gleitkörper gemäß Anspruch 1, **dadurch gekennzeichnet, daß** die mittlere Faserbündelbreite des Verstärkungsfaserbündelanteils der Reibschicht zwischen 0,01 mm und 1,5 mm liegt.

7. Reib- oder Gleitkörper gemäß Anspruch 1, **dadurch gekennzeichnet, daß** die mittlere Faserbündelbreite des Matrixfaserbündelanteils der Reibschicht zwischen 0,001 mm und 0,6 mm liegt.

8. Verfahren zur Herstellung eines Reib- oder Gleitkörpers aus mindestens zwei mit Faserbündeln verstärkten Verbundwerkstoffen mit keramischer Matrix, wobei ein erster Verbundwerkstoff als Reibschicht die Außenseite des Gleitkörpers bildet und ein zweiter Verbundwerkstoff als Tragkörper mit der Reibschicht flächig verbunden ist, **dadurch gekennzeichnet, daß** bei der Herstellung der beiden Verbundwerkstoffe jeweils verschiedene Anteile an Faserbündeln, ein Verstärkungsfaserbündelanteil und ein Matrixfaserbündelanteil, mit unterschiedlicher mittlerer Faserbündellänge im Herstellungsprozess als Ausgangsstoffe benutzt werden, derart daß die mittlere Faserbündellänge des Verstärkungsfaserbündelanteils des Tragkörpers zwischen 4 mm und 20 mm liegt, die mittlere Faserbündellänge des Matrixfaserbündelanteils des Tragkörpers zwischen 0,2 mm und 5 mm liegt, die mittlere Faserbündellänge des Verstärkungsfaserbündelanteils der Reibschicht zwischen 0,5 mm und 8 mm liegt, und die mittlere Faserbündellänge des Matrixfaserbündelanteils der Reibschicht zwischen 0,25 mm und 4 mm liegt, umfassend die Schritte
- Mischen der verschiedenen Faserbündelanteile für jeden der mindestens zwei Verbundwerkstoffe mit mindestens einem carbonisierbaren Bindemittel,
- Granulieren der Mischung für die Reibschicht
- Verdichten der Mischung für den Tragkörper und Verdichten des Granulats für den Reibkörper zu Formkörpern
- Carbonisieren der Formkörper
- Verbinden der Formkörper für Tragkörper und Reibschicht, und
- Silicieren der verbundenen Formkörper durch Infiltration mit flüssigem Silicium oder Silicium-Legierungen oder durch CVI-Abscheidung von Silicium, Siliciumcarbid oder anderen Silicium-Verbindungen.

9. Verfahren nach Anspruch 8, **dadurch gekennzeichnet, daß** die carbonisierbaren Bindemittel ausgewählt werden aus den Gruppen der Harze und Peche, wobei die Harze ausgewählt werden aus der Gruppe der Thermoplaste, Phenolharze, Furanharze, Polyacrylatharze, Polyimidharze, Cyanatharze und Epoxidharze, und die Peche ausgewählt werden aus der Gruppe der Fest- und Flüssigpeche, Mesophasenpeche, Steinkohlenteerpeche und Petrolpeche.

10. Verfahren nach Anspruch 8, **dadurch gekennzeichnet, daß** der Massenanteil der beim Mischprozess eingebrachten Faserbündel für den Trägerkörper insgesamt 50 % bis 99 % der Gesamtmasse der Mischung für den Tragkörper, und der Massenanteil der beim Mischprozess eingebrachten Faserbündel für die Reibschicht insgesamt 35 % bis 90 % der Gesamtmasse der Mischung für die Reibschicht beträgt.

## Claims

1. Friction or sliding body of at least two composite materials reinforced with fibre bundles and containing a ceramics matrix, wherein a first composite material as friction layer forms the outside of the sliding body and a second composite material as carrier body is joined in a planar manner to the friction layer, **characterised in that** the at least two composite materials have different fractions of fibre bundles, namely a reinforcing fibre bundle fraction and a matrix fibre bundle fraction, with different mean fibre bundle lengths, wherein the mean fibre bundle length of the reinforcing fibre bundle fraction of the carrier body is between 4 mm and 20 mm, the mean fibre bundle length of the matrix fibre bundle fraction of the carrier body is between 0.2 mm and 5 mm, the mean fibre bundle length of the reinforcing fibre bundle fraction of the friction layer is between 0.5 mm and 8 mm, and the mean fibre bundle length of the matrix fibre bundle fraction of the friction layer is between 0.25 mm and 4 mm.

2. Friction or sliding body according to claim 1, **characterised in that** the ratio of the mean fibre bundle length of the reinforcing fibre bundle fraction of the carrier body to the mean fibre bundle length of the reinforcing fibre bundle fraction of the friction layer is between 2 and 15.

3. Friction or sliding body according to claim 1, **characterised in that** the ratio of the mean fibre bundle length of the matrix fibre bundle fraction of the carrier body to the mean fibre bundle length of the matrix fibre bundle fraction of the friction layer is between 1.3 and 12.

4. Friction or sliding body according to claim 1, **characterised in that** the mean fibre bundle width of the reinforcing fibre bundle fraction of the carrier body is between 0.02 mm and 5 mm.

5. Friction or sliding body according to claim 1, **characterised in that** the mean fibre bundle width of the matrix fibre bundle fraction of the carrier body is between 0.02 mm and 2 mm.

6. Friction or sliding body according to claim 1, **characterised in that** the mean fibre bundle width of the reinforcing fibre bundle fraction of the friction layer is between 0.01 mm and 1.5 mm.

7. Friction or sliding body according to claim 1, **characterised in that** the mean fibre bundle width of the matrix fibre bundle fraction of the friction layer is between 0.001 mm and 0.6 mm.

8. Process for the production of a friction or sliding body of at least two composite materials reinforced with fibre bundles and containing a ceramics matrix, wherein a first composite material as friction layer forms the outside of the sliding body and a second composite material as carrier body is joined in a planar manner to the friction layer, **characterised in that** in the production of the two composite materials different fractions of fibre bundles, namely a reinforcing fibre bundle fraction and a matrix fibre bundle fraction, with different mean fibre bundle lengths, are in each case used as starting substances in the production process, in such a way that the mean fibre bundle length of the reinforcing fibre bundle fraction of the carrier body is between 4 mm and 20 mm, the mean fibre bundle length of the matrix fibre bundle fraction of the carrier body is between 0.2 mm and 5 mm, the mean fibre bundle length of the reinforcing fibre bundle fraction of the friction layer is between 0.5 mm and 8 mm, and the mean fibre bundle length of the matrix fibre bundle fraction of the friction layer is between 0.25 mm and 4 mm, the said process comprising the following steps:
- mixing the different fibre bundle fractions for each of the at least two composite materials with at least one carbonizable binder,
- granulating the mixture for the friction layer,
- compacting the mixture for the carrier body and compacting the granular material for the friction body to form moulded bodies,
- carbonizing the moulded bodies,
- joining the moulded bodies for the carrier body and friction layer, and
- siliconizing the joined moulded bodies by infiltration with liquid silicon or silicon alloys or by chemical vapour deposition of silicon, silicon carbide or other silicon compounds.

9. Process according to claim 8, **characterised in that** the carbonizable binders are selected from the group comprising resins and pitches, wherein the resins are selected from the group of thermoplastics, phenol resins, furan resins, polyacrylate resins, polyimide resins, cyanate resins and epoxy resins, and the pitches are selected from the group comprising solid and liquid pitches, mesophase pitches, coal-tar pitches and petroleum pitches.

10. Process according to claim 8, **characterised in that** the mass fraction of the fibre bundles for the carrier body used in the mixing process amounts overall to 50% to 99% of the total weight of the mixture for the carrier body, and the mass fraction of the fibre bundles for the friction layer used in the mixing process amounts overall to 35% to 90% of the total weight of the mixture for the friction layer.

## Revendications

1. Corps de frottement ou de glissement constitué d'au moins deux matériaux composites à matrice céramique renforcés par des faisceaux de fibres, un premier matériau composite formant, en tant que couche de frottement, la paroi extérieure du corps de glissement, et un deuxième matériau composite étant relié, en tant que corps porteur, à la couche de frottement en deux dimensions, **caractérisé en ce que** les au moins deux matériaux composites comprennent différentes fractions de faisceaux de fibres, une fraction de faisceau de fibres de renforcement et une fraction de faisceau de fibres à matrice, ayant une longueur de faisceau de fibres variable moyenne, la longueur de faisceau de fibres moyenne de la fraction de faisceau de fibres de renforcement du corps porteur se situant entre 4 mm et 20 mm, la longueur de faisceau de fibres moyenne de la fraction de faisceau de fibres à matrice du corps porteur se situant entre 0,2 mm et 5 mm, la longueur de faisceau de fibres moyenne de la fraction de faisceau de fibres de renforcement de la couche de frottement se situant entre 0,5 mm et 8 mm, et la longueur de faisceau de fibres moyenne de la fraction de faisceau de fibres à matrice de la couche de frottement se situant entre 0,25 mm et 4 mm.

2. Corps de frottement ou de glissement selon la revendication 1, **caractérisé en ce que** le rapport de la longueur de faisceau de fibres moyenne de la fraction de faisceau de fibres de renforcement du corps porteur à la longueur de faisceau de fibres moyenne de la fraction de faisceau de fibres de renforcement de la couche de frottement est compris entre 2 et 15.

3. Corps de frottement ou de glissement selon la revendication 1, **caractérisé en ce que** le rapport de la longueur de faisceau de fibres moyenne de la fraction de faisceau de fibres à matrice du corps porteur à la longueur de faisceau de fibres moyenne de la fraction de faisceau de fibres à matrice de la couche de frottement est compris entre 1,3 et 12.

4. Corps de frottement ou de glissement selon la revendication 1, **caractérisé en ce que** la largeur de faisceau de fibres moyenne de la fraction de faisceau de fibres de renforcement du corps porteur est comprise entre 0,02 mm et 5 mm.

5. Corps de frottement ou de glissement selon la revendication 1, **caractérisé en ce que** la largeur de faisceau de fibres moyenne de la fraction de faisceau de fibres à matrice du corps porteur est comprise entre 0,02 mm et 2 mm.

6. Corps de frottement ou de glissement selon la revendication 1, **caractérisé en ce que** la largeur de faisceau de fibres moyenne de la fraction de faisceau de fibres de renforcement de la couche de frottement est comprise entre 0,01 mm et 1,5 mm.

7. Corps de frottement ou de glissement selon la revendication 1, **caractérisé en ce que** la largeur de faisceau de fibres moyenne de la fraction de faisceau de fibres à matrice de la couche de frottement est comprise entre 0,001 mm et 0,6 mm.

8. Procédé de fabrication d'un corps de frottement ou de glissement constitué d'au moins deux matériaux composites à matrice céramique renforcés par des faisceaux de fibres, un premier matériau composite formant, en tant que couche de frottement, la paroi extérieure du corps de glissement, et un deuxième matériau composite étant relié, en tant que corps porteur, à la couche de frottement en deux dimensions, **caractérisé en ce que**, lors de la fabrication des deux matériaux composites, différentes fractions de faisceaux de fibres, une fraction de faisceau de fibres de renforcement et une fraction de faisceau de fibres à matrice, ayant une longueur de faisceau de fibres moyenne différente, sont utilisées dans le processus de fabrication en tant que matériaux de base, de sorte que la longueur de faisceau de fibres moyenne de la fraction de faisceau de fibres de renforcement du corps porteur se situe entre 4 mm et 20 mm, la longueur de faisceau de fibres moyenne de la fraction de faisceau de fibres à matrice du corps porteur se situe entre 0,2 mm et 5 mm, la longueur de faisceau de fibres moyenne de la fraction de faisceau de fibres de renforcement de la couche de frottement se situe entre 0,5 mm et 8 mm, et la longueur de faisceau de fibres moyenne de la fraction de faisceau de fibres à matrice de la couche de frottement se situe entre 0,25 mm et 4 mm, les étapes consistant à
- mélanger les différentes fractions de faisceau de fibres pour chacun des au moins deux matériaux composites avec au moins un liant carbonisable,
- granuler le mélange pour la couche de frottement
- compresser le mélange pour le corps porteur et compresser les granulés pour le corps de frottement en corps moulé
- carboniser le corps moulé
- lier les corps à mouler pour le corps porteur et la couche de frottement, et
- silicer le corps moulé lié en infiltrant du silicium liquide ou des alliages de silicium, ou en réalisant un dépôt CVI de silicium, de carbure de silicium ou d'autres composés de silicium.

9. Procédé selon la revendication 8, **caractérisé en ce que** les liants carbonisables sont choisis à partir du groupe des résines et poix, les résines étant choisies à partir du groupe des thermoplastiques, résines de phénol, résines de furane, résines de polyacrylates, résines de polymides, résines de cyanates, et résines époxy, et les poix sont choisies à partir du groupe des poix solides et liquides, des poix à mésophases, des poix de goudron de houille, et des poix de pétrole.

10. Procédé selon la revendication 8, **caractérisé en ce que** la teneur massique de faisceau de fibres utilisée dans le processus de mélange pour le corps porteur correspond à environ 50 % à 99 % de la masse totale du mélange pour le corps porteur, et la teneur massique de faisceau de fibres utilisée pour le processus de mélange de la couche de frottement correspond à environ 35 % à 90 % de la masse totale du mélange pour la couche de frottement.
